# EUROPÄISCHE PATENTSCHRIFT

(11) **EP 1 955 875 B1**
(45) Veröffentlichungstag und Bekanntmachung des Hinweises auf die Patenterteilung: **29.08.2012**
(21) Anmeldenummer: 07021441.6
(22) Anmeldetag: 03.11.2007
(51) Int. Cl.: B60G 3/20, B60G 3/14

(54) **Radaufhängung für Kraftfahrzeuge**
Wheel suspension for motor vehicles
Suspension de roue pour véhicules automobiles

(30) Priorität: 07.02.2007 DE 102007005967
(43) Veröffentlichungstag der Anmeldung: 13.08.2008
(73) Patentinhaber: AUDI AG, 85045 Ingolstadt (DE)
(72) Erfinder: Züge, Frank, 85110 Schnelldorf (DE); Glas, Achim, 85080 Gaimersheim (DE); Langhoff, Hans-Jürgen, 85101 Lenting (DE); Bschierl, Christian, 85095 Denkendorf (DE)
(74) Vertreter: Asch, Konrad

(56) Entgegenhaltungen:
- EP-A- 1 457 360
- EP-A- 1 738 938
- WO-A-92/16386
- DE-A1- 3 843 613
- US-A- 5 697 633

## Beschreibung

Die Erfindung betrifft eine Radaufhängung für Kraftfahrzeuge gemäß dem Oberbegriff des Patentanspruches 1.

Eine derartige Radaufhängung zeigt beispielsweise die DE 38 43 613 A1, bei der die unteren und gegebenenfalls die oberen Lenker der Radführung Einzellenker sind, die in Verbindung mit einer gelenkig mit dem Aufbau oder mit der Lenkung des Kraftfahrzeuges verbundenen Spurstange eine spurstabile Radführung bilden. Der Vorteil einer derartigen Radaufhängung mit aufgelösten Lenkern liegt insbesondere in der Bildung einer virtuellen Lenkachse, die weitgehendst unabhängig von baulichen Zwängen so gelegt werden kann, dass günstige Achswerte wie Radsturz, Nachlauf, Lenkrollradius, Störkrafthebelarm bei angetriebenen Rädern (Maß a), etc. einstellbar sind. In Verbindung mit der Federung und Dämpfung des Kraftfahrzeuges kann ein Federbein vorgesehen sein, dessen Teleskop-Stoßdämpfer baulich günstig an dem vorderen unteren Lenker der Radaufhängung über ein Gummi-Metall-Hülsenlager angelenkt ist.

Aufgabe der Erfindung ist es, eine Radaufhängung der gattungsgemäßen Art vorzuschlagen, die hinsichtlich des Fahrkomforts weiter verbessert ist.

Diese Aufgabe wird erfindungsgemäß mit den kennzeichnenden Merkmalen des Patentanspruches 1 gelöst. Vorteilhafte Weiterbildungen der Erfindung beschreiben die Unteransprüche.

Erfindungsgemäß wird vorgeschlagen, dass zumindest der vordere untere Lenker derart angeordnet ist, dass der Anlenkpunkt des Federbeines am Lenker bei einem Durchfedern des Rades in Fahrzeugquerrichtung betrachtet parallel zur Längsachse des Federbeines verläuft. Wie erkannt wurde, kann mit dieser Maßnahme eine ansonsten aufgrund der sich über den Federweg des Rades beim Ein- und Ausfedern ändernden Neigung des Federbeines relativ zum Lenker auftretende Verzwängung des unteren Gummi-Metall-Hülsenlagers vermieden werden. Daraus resultiert ein verbessertes Ansprechverhalten in der Abfederung des Kraftfahrzeuges; am Teleskop-Stoßdämpfer gegebenenfalls auftretende stick-slip-Effekte werden eliminiert.

Eine auch mit Hinblick auf die übrigen Fahreigenschaften des Kraftfahrzeuges vorteilhafte Auslegung der Radaufhängung besteht darin, dass der untere vordere Lenker im wesentlichen in Fahrzeugquerrichtung und der hintere untere Lenker ca. 45 Grad nach hinten innen geneigt dazu positioniert sind.

Des weiteren können die aufbauseitigen Lagerpunkte der unteren Lenker im wesentlichen horizontal in gleicher Höhe ausgerichtet sein, womit eine unerwünschte Auswanderung des besagten unteren Lagerpunktes des Federbeines über den gesamten Federweg der Radaufhängung ebenfalls vorteilhaft vermieden wird.

In an sich bekannter Weise kann die Neigung des Federbeines ca. 5 bis 10 Grad nach oben hinten und nach oben innen betragen, um neben einer baulich günstigen Anordnung des Federbeines eine gut beherrschbare Abstimmung der radführenden Lenker mit dem Federbein zu bewirken.

Dabei kann auch durch eine geeignete Auslegung der radträgerseitigen Anlenkpunkte die durch die beiden unteren Lenker definierte Horizontalebene senkrecht zur Neigung des Federbeines in Fahrzeugquerrichtung betrachtet ausgerichtet sein.

Schließlich kann das aufbauseitige Lager des vorderen unteren Lenkers in Fahrzeugquerrichtung steifer als in Richtung der Längsachse des Federbeines ausgelegt sein. Dies bewirkt eine zusätzliche Verbesserung des Fahrkomforts und der Dämpfungseigenschaften der Radaufhängung gegenüber dem Aufbau des Kraftfahrzeuges, ohne die Führungseigenschaften des vorderen Lenkers zu beeinträchtigen.

Ein Ausführungsbeispiel der Erfindung ist im folgenden näher erläutert. Die schematische Zeichnung zeigt in:
- Fig. 1: mit einem Radträger, zwei unteren, aufgelösten Lenkern, einer angedeuteten Spurstange und einem Federbein;
- Fig. 2: eine Seitenansicht S der Fig. 1 der Radaufhängung; und
- Fig. 3: eine Draufsicht auf die Radanordnung gemäß den Fig. 1 und 2.

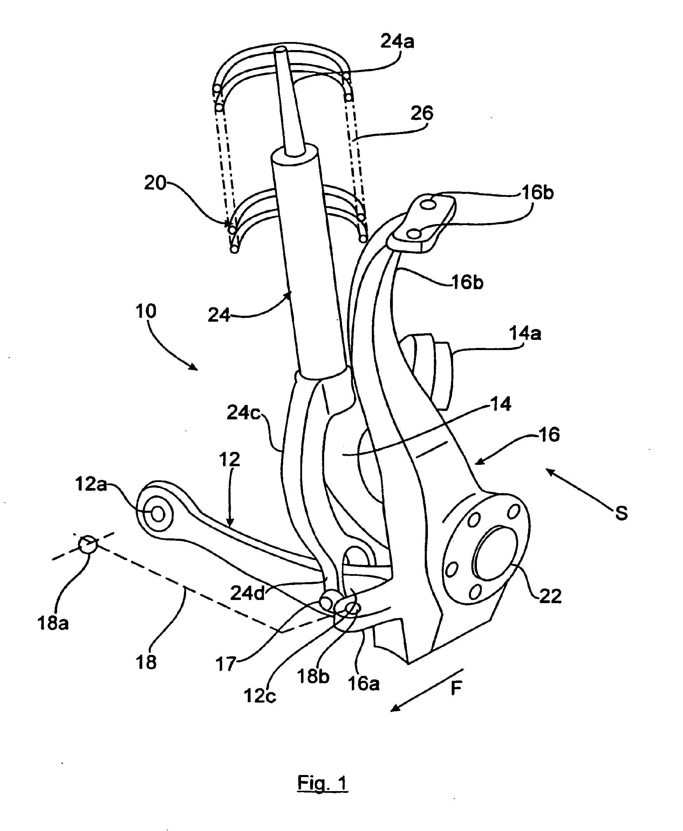

In den **Fig. 1 bis 3** ist die untere Ebene einer vorderen linken Radaufhängung 10 für Kraftfahrzeuge dargestellt, die sich im wesentlichen aus zwei unteren, einzelnen Lenkern 12, 14, einem Radträger 16, einer nur angedeuteten Spurstange 18 und einem Federbein 20 zusammensetzt. Die Fahrtrichtung des Kraftfahrzeuges ist mit F angezeigt. Das nicht dargestellte Rad ist an einem Radflansch 22 befestigt, der in dem Radträger 16 drehbar gelagert ist.

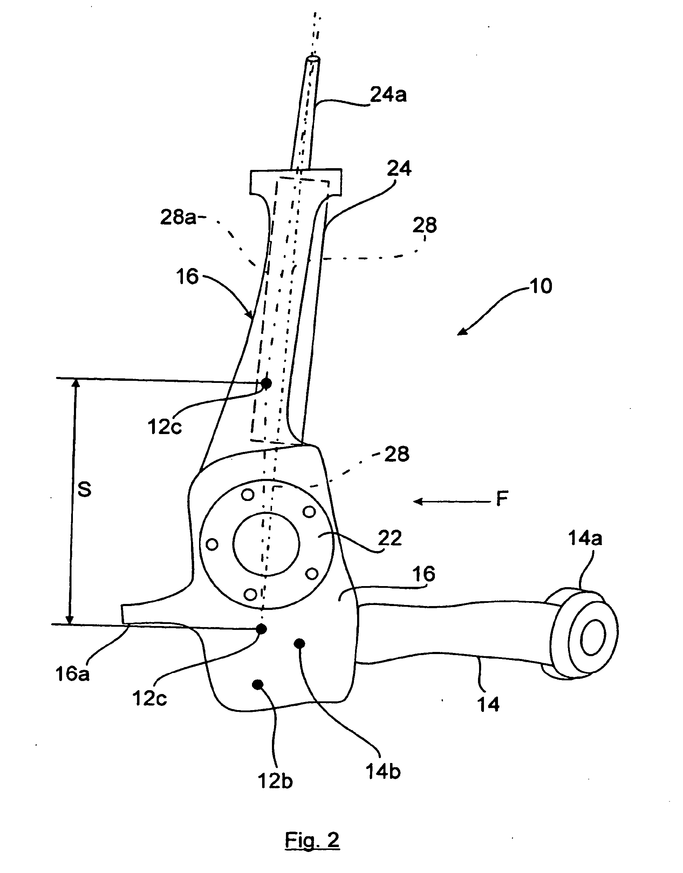

Die Lenker 12, 14 sind separate Lenker, die über winkelbewegliche Gummi-Metall-Hülsengelenke 12a, 14a am nicht dargestellten Aufbau (oder einem Hilfsrahmen) des Kraftfahrzeuges und über Kugelgelenke 12b, 14b (vgl. Fig. 2) am Radträger 16 angelenkt sind.

Als drittes - in der unteren Ebene der Radaufhängung 10 gelegenes - Radführungselement ist die Spurstange 18 vorgesehen, die einerseits über ein Kugelgelenk 18a mit einer nicht dargestellten Lenkungseinrichtung des Kraftfahrzeuges verbunden ist und andererseits über ein Kugelgelenk 18b an einem Lenkarm 16a des Radträgers 16 angelenkt ist.

Bei einer Radaufhängung 10 für nicht gelenkte Räder eines Kraftfahrzeuges ist die Spurstange 18 als weiterer Lenker am Aufbau angelenkt.

Das Federbein 20 setzt sich in bekannter Weise aus einem Teleskop-Stoßdämpfer 24 und einer diesen koaxial umgebenden Schraubendruckfeder bzw. Tragfeder 26 zusammen.

Die Kolbenstange 24a des Stoßdämpfers 24 ist über ein nicht dargestelltes Dämpferlager an einem Lagerbock oder direkt am Aufbau des Kraftfahrzeuges angelenkt, an dem auch das obere Ende der Tragfeder 26 abgestützt ist. Das untere Ende der Tragfeder 26 ist über einen Federteller am Dämpferzylinder 24b des Stoßdämpfers 24 abgestützt.

Der Dämpferzylinder 24b des Stoßdämpfers 24 ist ferner über ein leicht bogenförmig ausgeführtes Stützteil 24c mit einem gabelförmigen Anschlussteil 24d unter Zwischenschaltung eines Gummi-Metall-Hülsengelenkes 12c in Nähe des Radträgers 16 an dem vorderen Lenker 12, der im folgenden als Traglenker 12 bezeichnet ist, angelenkt. Die Gelenkachse des Hülsengelenkes 12c ist wie die zugehörige Befestigungsschraube 17 in Längsrichtung des Kraftfahrzeuges ausgerichtet.

An dem nach oben verlängerten Hals 16b des Radträgers 16 sind Aufnahmebohrungen für den Anschluss der oberen Einzellenker (oder eines Querlenkers) der Radaufhängung 10 vorgesehen, die Einzellenker sind der besseren Übersichtlichkeit wegen ebenso wenig dargestellt wie die Scheibenbremseinrichtung und das Rad der Radaufhängung 10.

Der vordere untere Lenker bzw. Traglenker 12 ist nunmehr derart angeordnet, dass der Anlenkpunkt 12c (Gelenkmittelpunkt des Hülsengelenkes 12c) des Federbeines 20 am Traglenker 12 bei einem Durchfedern des Rades (Federweg s) in Fahrzeugquerrichtung betrachtet (vgl. **Fig. 2**) zumindest annähernd parallel zur Längsachse (strichpunktierte Linie 28) des Federbeines 20 verläuft. Die Längsachse 28 des Federbeines 20 ändert sich deshalb über den Durchfederweg der Radaufhängung 10 nur unwesentlich auf 28a und bewirkt keine Verzwängung des Hülsengelenkes 12c oder einseitig wirkende Momente der Tragfeder 26 auf den Stoßdämpfer 24.

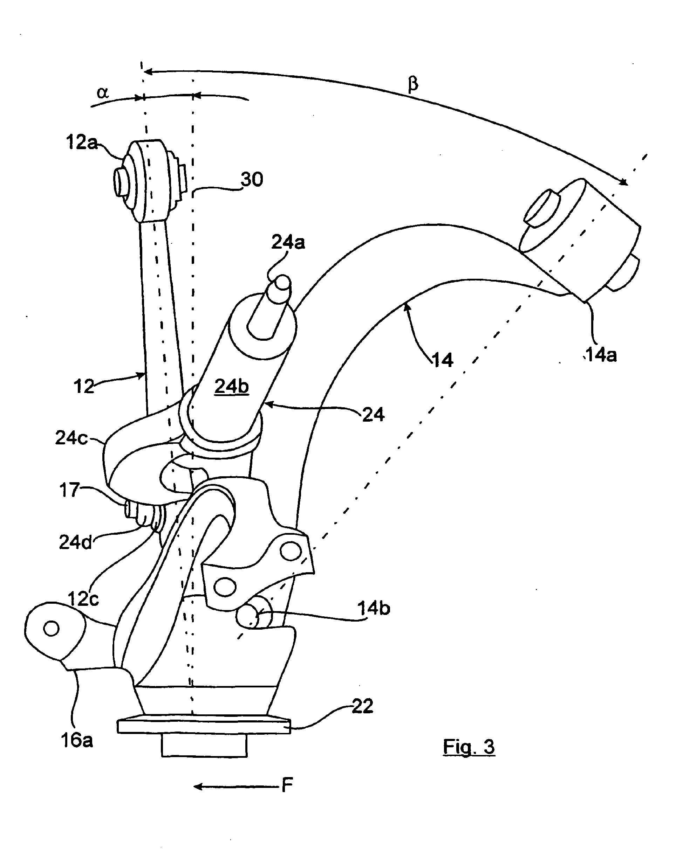

Dazu sind der Traglenker 12 wie aus **Fig. 3** ersichtlich mit einer Abweichung von ca. 4 Grad (Winkel α), also im wesentlichen in Fahrzeugquerrichtung (strichpunktierte Linie 30), und der hintere untere Lenker ca. 45 Grad (Winkel β) nach hinten innen geneigt dazu positioniert.

Ferner sind die aufbauseitigen Lagerpunkte 12a, 14a bzw. deren Gummi-Metall-Hülsengelenke 12a, 14a der unteren Lenker 12, 14 im wesentlichen horizontal in etwa in gleicher Höhe ausgerichtet.

Ferner sind die aufbauseitigen Lagerpunkte 12a, 14a bzw. deren Gummi-Metall-Hülsengelenke 12a, 14a der unteren Lenker 12, 14 im wesentlichen horizontal in etwa in gleicher Höhe ausgerichtet.

Die Neigung des Federbeines 20 gegenüber einer Lotrechten beträgt zudem wie aus den **Fig. 2** **und** **3** ersichtlich ist ca. 5 bis 10 Grad nach oben hinten und nach oben innen.

Die beiden unteren Lenker sind windschief zueinander angeordnet. Ihre Ausrichtung ist so gewählt, dass eine parallele Verschiebung des unteren hinteren Lenkers mit dem radseitigen Gelenkpunkt 14b in den Gelenkpunkt 12b des Traglenkers mit diesem eine Ebene ergibt, die nahezu senkrecht zur dargestellten Neigung (ca. 5 Grad) des Federbeines 20 in Fahrzeugquerrichtung betrachtet ausgerichtet ist.

Schließlich ist das aufbauseitige Lager 12a des vorderen unteren Traglenkers 12 in Fahrzeugquerrichtung 30 steifer als in Richtung der Längsachse 28 des Federbeines 20 (also in der Hochachse) ausgelegt. Derartige "gespreizte" Hülsenlager sind bekannter Stand der Technik und können z.B. materialschwächende Nieren (in der Hochachse) oder materialverstärkende Metalleinlagen (in der Querachse) etc. aufweisen und sind deshalb nicht dargestellt.

## Patentansprüche

1. Radaufhängung für Kraftfahrzeuge, mit je Rad zwei unteren separate Lenkern (12, 14), die in jeweils einem definierten Winkel (β) zueinander angeordnet sind und einerseits mit dem Aufbau des Kraftfahrzeuges und andererseits mit einem Radträger (16) gelenkig verbunden sind, ferner mit einem Federbein (20), das in einem definierten Winkel zu einer Lotrechten ausgerichtet am Aufbau des Kraftfahrzeuges und an dem vorderen unteren Lenker (12) über einen Anlenkpunkt (12c) angelenkt ist, **dadurch gekennzeichnet, dass** zumindest der vordere untere Lenker (12) derart angeordnet ist, dass der Anlenkpunkt (12c) des Federbeines (20) am Lenker (12) bei einem Durchfedern und/oder Lenken des Rades in Fahrzeugquerrichtung (30) betrachtet nahezu parallel, vorzugsweise in einem Winkel zwischen 0 und 5 Grad, zur Längsachse (28) des Federbeines (20) verläuft.

2. Radaufhängung nach Anspruch 1, **dadurch gekennzeichnet, dass** der untere vordere Lenker (12) im wesentlichen in Fahrzeugquerrichtung (30) und der hintere untere Lenker (14) ca. 45 Grad nach hinten innen geneigt dazu positioniert ist.

3. Radaufhängung nach den Ansprüchen 1 und 2, **dadurch gekennzeichnet, dass** die aufbauseitigen Lagerpunkte (12a, 14a) der unteren Lenker (12, 14) im wesentlichen horizontal und in etwa in gleicher Höhe ausgerichtet sind.

4. Radaufhängung nach einem der vorhergehenden Ansprüche, **dadurch gekennzeichnet, dass** die Neigung des Federbeines (20) gegenüber einer Lotrechten ca. 5 bis 10 Grad nach oben hinten und nach oben innen ausgerichtet ist.

5. Radaufhängung nach Anspruch 4, **dadurch gekennzeichnet, dass** die durch die beiden unteren Lenker (12, 14) definierte Horizontalebene nahezu senkrecht zur Neigung des Federbeines (20) in Fahrzeugquerrichtung (30) betrachtet ausgerichtet ist.

6. Radaufhängung nach einem oder mehreren der vorhergehenden Ansprüche, **dadurch gekennzeichnet, dass** das aufbauseitige Gelenk (12a) des vorderen unteren Lenkers (12) in Fahrzeugquerrichtung steifer als in Richtung der Längsachse (28) des Federbeines (20) ausgelegt ist.

## Claims

1. Wheel suspension for motor vehicles, comprising two lower separate suspension links (12, 14) per wheel, which are arranged at a defined angle (β) to each other and are articulated to the body of the motor vehicle and also to a wheel carrier (16), further comprising a McPherson strut (20) which, oriented at a defined angle to the vertical, is articulated via a pivot point (12c) to the body of the motor vehicle and to the front lower suspension link (12), **characterised in that** at least the front lower suspension link (12) is arranged in such a way that when the wheel is deflected and/or steered the pivot point (12c) of the McPherson strut (20) on the suspension link (12), viewed in the transverse direction (30) of the vehicle, extends approximately parallel, preferably at an angle of between 0 and 5 degrees, to the longitudinal axis (28) of the McPherson strut (20).

2. Wheel suspension according to claim 1, **characterised in that** the lower front suspension link (12) is positioned substantially in the transverse direction (30) of the vehicle and the rear lower suspension link (14) is positioned so as to be inclined backwards and inwards at approximately 45 degrees thereto.

3. Wheel suspension according to claim 1 and claim 2, **characterised in that** the body-side bearing points (12a, 14a) of the lower suspension links (12, 14) are oriented substantially horizontally and at approximately the same height.

4. Wheel suspension according to any of the preceding claims, **characterised in that** the inclination of the McPherson strut (20) is oriented upwards and backwards and upwards and inwards at approximately 5 to 10 degrees relative to the vertical.

5. Wheel suspension according to claim 4, **characterised in that** the horizontal plane defined by the two lower suspension links (12, 14) is oriented almost perpendicular to the inclination of the McPherson strut (20) viewed in the transverse direction of the vehicle (30).

6. Wheel suspension according to any one or more of the preceding claims, **characterised in that** the body-side joint (12a) of the front lower suspension link (12) in the transverse direction of the vehicle is designed to be stiffer than in the direction of the longitudinal axis (28) of the McPherson strut (20).

## Revendications

1. Suspension de roue pour véhicules automobiles, avec pour chaque roue deux bras de liaison (12, 14) séparés inférieurs qui sont disposés respectivement en formant un angle (β) défini l'un par rapport à l'autre et qui sont raccordés de façon articulée d'un côté à la caisse du véhicule automobile et de l'autre côté à un support de roue (16), en outre avec une jambe de suspension (20) qui est orientée selon un angle défini par rapport à une verticale et est articulée sur la caisse du véhicule automobile et sur le bras de liaison (12) inférieur avant par le biais d'un point d'articulation (12c), **caractérisé en ce que** au moins le bras de liaison (12) inférieur avant est disposé de sorte que le point d'articulation (12c) de la jambe de suspension (20) sur le bras de liaison (12), lors d'une flexion et/ou d'un braquage de la roue, vu dans la direction transversale du véhicule (30), s'étend quasiment parallèle, de préférence en formant en angle entre 0 et 5 degrés, par rapport à l'axe longitudinal (28) de la jambe de suspension (20).

2. Suspension de roue selon la revendication 1, **caractérisée en ce que** le bras de liaison (12) inférieur avant est positionné essentiellement dans la direction transversale du véhicule (30) et le bras de liaison (14) inférieur arrière est positionné essentiellement en étant incliné d'environ 45 degrés vers l'arrière à l'intérieur par rapport à cette direction.

3. Suspension de roue selon les revendications 1 et 2, **caractérisée en ce que** les points de palier (12a, 14a), côté caisse, des bras de liaison (12, 14) inférieurs sont orientés essentiellement horizontalement et à peu près à la même hauteur.

4. Suspension de roue selon une des revendications précédentes, **caractérisée en ce que** l'inclinaison de la jambe de suspension (20) est orientée par rapport à une verticale à environ 5 à 10 degrés vers le haut à l'arrière et vers le haut à l'intérieur.

5. Suspension de roue selon la revendication 4, **caractérisée en ce que** le plan horizontal défini par les deux bras de liaison (12, 14) inférieurs est orienté quasiment perpendiculairement à l'inclinaison de la jambe de suspension (20) vu dans la direction transversale du véhicule (30).

6. Suspension de roue selon une ou plusieurs des revendications précédentes, **caractérisée en ce que** l'articulation (12a), côté caisse, du bras de liaison (12) inférieur avant est conçue de façon plus rigide dans la direction transversale du véhicule que dans la direction de l'axe longitudinal (28) de la jambe de suspension (20).
